# EUROPEAN PATENT SPECIFICATION

(11) **EP 0 795 527 B1**
(45) Date of publication and mention of the grant of the patent: **22.03.2000**
(21) Application number: 96660105.6
(22) Date of filing: 23.12.1996
(51) Int. Cl.: C05F 17/02, B28B 19/00

(54) **Floor-construction of a composting tunnel and a method for manufacturing it**
Bodenkonstruktion eines Kompostierungstunnels und Verfahren zu ihrer Herstellung
Construction de plaucher pour des tunnels de préparation de compost

(30) Priority: 12.03.1996 FI 960160 U
(43) Date of publication of application: 17.09.1997
(73) Proprietor: Vam Vapo Wastech Ltd Oy, 40100 Jyväskylä (FI)
(72) Inventor: Isomöttönen, Kauko, 40720 Jyväskylä (FI); Koponen, Antero, 41340 Laukaa (FI)
(74) Representative: Helke, Kimmo Kalervo

(56) References cited:
- EP-A- 0 483 089
- DE-A- 2 551 599
- DE-A- 2 904 241
- DE-A- 3 631 010

## Description

The present invention relates to a floor construction for a composting tunnel, where the floor includes prefabricated hollow-core base slabs each forming a plurality of main air ducts in their hollow cores and the floor has also air distribution ducts extending from the main air ducts inside the floor to the floor surface for feeding air to the material on the floor. The invention also concerns a method for the manufacture of the floor construction of a composting tunnel.

Particularly in the Netherlands, tunnel composting has been used for the treatment of organic waste. In known tunnel-type composting plants, the air circulation has been arranged by means of a network of air distribution pipes formed in the floor, and which have been cast inside the concrete floor. According to this, the pipe network in constructed ready as far as the nozzles, after which the network is covered by in-situ casting so that the air distribution holes remain visible.

German patent documents DE 25 51 599 A1 and DE 36 31 010 disclose floor constructions build of special bricks. These bricks have hollow cores, which form main air ducts. Each brick has grooves on the ends, while air distribution ducts are formed between two consecutive bricks.

Especially when a wheeled-loader is used in place of separate conveyor equipment to move the material, the floor must have a very high loadbearing capacity.

The object of the invention is to create a simpler way of creating a composting tunnel, and particularly the air-distribution ducts within its floor construction. The characteristic features of a floor construction according to this invention, and of the method used to manufacture the floor construction in question, appear in the accompanying Patent Claims. Very high loadbearing capacities can be achieved using modern hollow-core slabs, which generally contain prestressed steel reinforcement.

Other advantages and embodiments of the invention will appear later, in connection with the later examples of applications.

In the following, the invention is described in detail by reference to the accompanying drawings illustrating one application of the invention, in which
- Figure 1: shows one composting tunnel in partial cross-section,
- Figure 2: shows the floor construction of the composting tunnel in cross-section,
- Figure 3: shows a casting support according to the invention set in the floor construction.

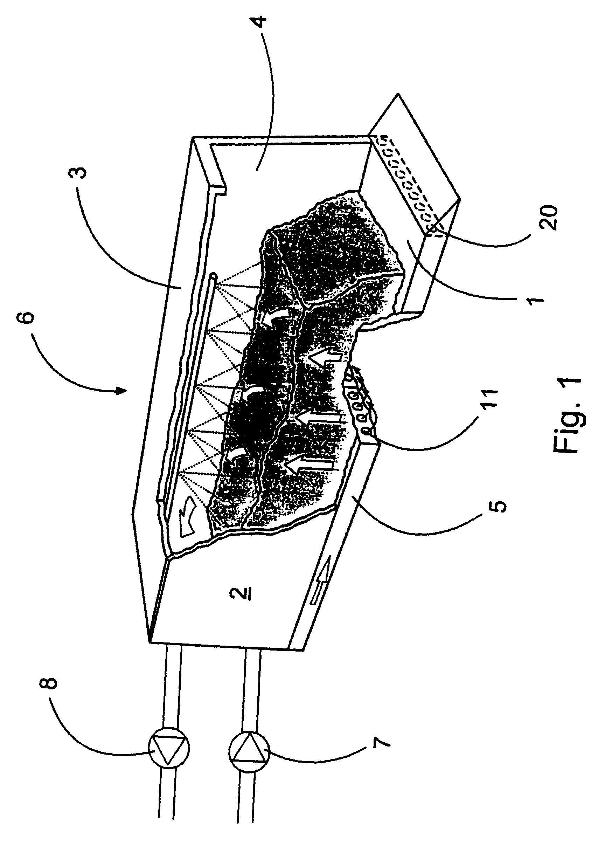

Figure 1 shows one composting tunnel, which is shown by the reference number 6. Generally, there are several of these composting tunnels 6 parallel to one another, when the flows of material can be evened, by rotating the composting stages in different tunnels. Composting tunnel 6 comprises a longitudinal composting space, which is formed by the floor 1, walls 2, and roof 3. At one end wall of the aforesaid composting space there is a door opening 4, which is closed during composting. In this application, the hollow-core slabs 5 of the floor construction rest against the ground, but they have an excellent loadbearing capacity, especially over short spans.

In the composting tunnel 6 according to Figure 1, the material is filled and emptied by a wheeled loader, but special conveyor equipment can also be used.

From the point of view of composting, air circulation is absolutely essential, and for this purpose there are fans 7 on the inlet side and correspondingly suction fans 8 on the exhaust side. Preheated inlet air is led into the hollow-core slabs 5 of the floor 1, through which the air is distributed to the composting space. There is usually also liquid spraying equipment in the composting tunnel 6, to maintain the desired moisture content and to distribute nutrients to the finished material. In a composting tunnel 6 according to Figure 1, sufficient loadbearing capacity can easily be obtained by means of hollow-core slabs 5, while the hollow-cores 11 of the hollow-core slab 5 form longitudinal main air ducts 11 inside the floor.

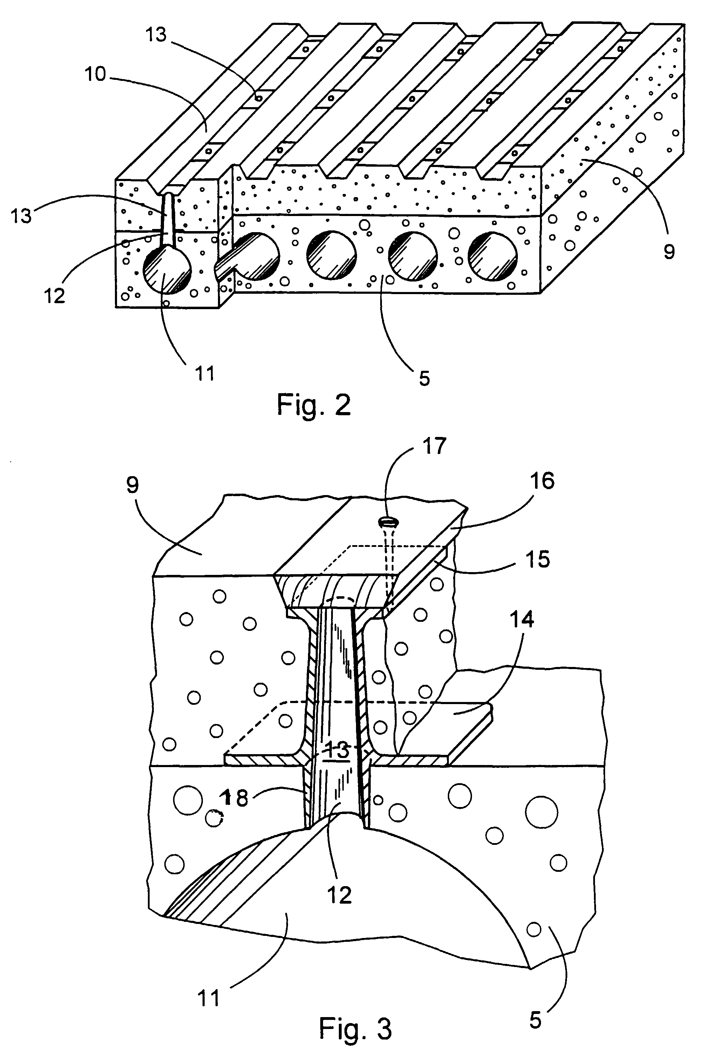

Figure 2 shows the floor construction 1 at one hollow-core slab 5. A surface screed 9, in which there are grooves 10, is cast on top on the hollow-core slab 5. These grooves 10 are formed at the hollow cores 11, so that the air distribution ducts 12 leading from the surface of the floor 1 to the hollow cores 11 can be seen at the bottom of the grooves 10. By means of these grooves 10, the air distribution ducts 12 are prevented from becoming blocked by the weight of the material. In addition, the layer of drying material spread beneath the material remains dry in groove 10, which reduces the probability of air distribution duct 12 becoming blocked, and improves the distribution of the air within the material. In order to clean the hollow cores 11, the ends of the hollow-core slab 5 have connections and shut-off devices 20 (Figure 1). When the ends are opened, the hollow cores 11 can be washed. The hollow-core slabs 5 advantageously rest longitudinally at a slight slope (2 - 5°), when the wash water naturally flows out.

In place of the grooves 10, it is possible to use a conical, upwards opening hole formed at each air distribution duct 12, without any essential loss in distribution.

Grooves 10, or the aforesaid holes are either formed in a surface screed 9, or they are formed during the manufacture of the hollow-core slab 5, or corresponding unit. It is, however, obvious, that it is not practical to make the air distribution ducts 12 during the manufacture of the hollow-core slabs 5, but that they are best made afterwards.

According to that invention in question, the air distribution ducts 12 extending to the floor surface are formed by using a separate casting support 13 in connection with the surface screed 9. Figure 3 shows a casting support 13 according to the invention, which thins conically upwards, and in which there are two flange components 14 and 15. The first flange component 14 is to support casting support 13 on the surface of the hollow-core slab 5 and the other flange support 15 is to attach the strip forming the groove 10 described above on top of casting support 13. Casting support 13 is advantageously manufactured from plastic, for example as an injection-moulded component. According to the method in accordance with the invention, the manufacture of the floor 1 of the composting tunnel 6 begins by forming hole 18, in which casting support 13 is placed, from the top downwards at hollow core 11 of hollow-core slab 5. Next, the lower flange component 14 is place against the surface of hollow-core slab 5 and is sealed, for example with silicon, when casting support 13 extends to the hollow core 11. Sealing prevents casting mass to drift to hollow cores. Timber strips 16 are placed on top of the upper flange components 15 of the casting supports 13, before casting the surface screed 9. The surface screed 9 is continued as far as the upper surface of the aforementioned timber strips 16 that are attached, for example, using screws. After the surface screed 9 has hardened, these strips 16 are removed, when the desired longitudinal grooves 10 are formed in the floor construction 1.

The conical slope of the holes determined by the casting supports 13 is advantageously 8 - 12° and the inner surfaces of the holes are smooth, which reduces the risk of blockage.

By means of the method according to the invention and casting supports 13, the manufacture of the floor construction 1 of a composting tunnel 6 is simple, and the result is a regular and durable floor construction of even quality. In addition, the amount and velocity of the air to be blown into the composting tunnel 6 can be suitably determined with the aid of various casting supports 13. On the basis of practical experience, the velocity of the air at the bottom of groove 10 is 5 - 6 m/s, which will be achieved with an air pressure of 2000 - 3000 kPa in hollow core 11, and an exhaust hole of casting support 13, which has a diameter of 15 mm (recommended size 10 - 20 mm). To achieve an advantageous distribution of air, air distribution ducts 12 are spaced 300 - 400 mm apart. The standard width of a hollow-core slab is 1200 mm and they contain four or five hollow cores next to one another. Besides accelerating the flow of air, the funnel-like construction of casting support 13 facilitates the self-cleaning of air distribution duct 12, because an object that possibly falls into air distribution duct 12, such as, for example, a stone, will drop into the main air duct 11, without blocking air distribution duct 12.

## Claims

1. A floor construction for a composting tunnel, where the floor includes prefabricated hollow-core base slabs (5) each forming a plurality of main air ducts (11) in their hollow cores and the floor has also air distribution ducts (12) extending from the main air ducts (11) inside the floor (1) to the floor surface for feeding air to the material on the floor, characterized in that the floor comprises said base slabs (5) and a separately cast floor layer (9) on the base slabs (5) surrounding an array of cast supports (13) defining said air distribution ducts (12).

2. A floor construction for a composting tunnel according to Claim 1, characterized in that each casting support (13) thins conically upwards and ends in a groove formed onto the cast floor layer (9).

3. A floor construction for a composting tunnel according to Claim 1 or 2, characterized in that the size of the air distribution ducts (12) is arranged so that the velocity of the air at the upper end of the air distribution duct (12) is 5 - 6 m/s, when the air pressure in the hollow core (11) is 2000 - 3000 kPa.

4. A floor construction for a composting tunnel according to Claims 1 - 3, characterized in that at least in one end of each hollow core slab (5) there are removable shut-off devices (20) to permit the cleaning of the hollow cores (11).

5. A method for manufacturing the floor construction of a composting tunnel, in which method prefabricated hollow-core slabs (5) are used in the floor construction and they form main air ducts (11) in their hollow cores and air distribution ducts (12) extending from the aforesaid main air ducts (11) to the floor surface are formed for feeding air to the material on the floor, characterized in that at the hollow cores (11) of the hollow-core slabs (5) holes (18) are formed downwards and a surface screed (9) is cast using casting supports (13) set in the aforesaid holes (18) to form the air distribution ducts (12).

6. A method according to Claim 5, characterized in that strips (16) running in the direction of the longitudinal axis of the composting tunnel (6) are attached to the top of the casting supports (13), to act as casting formwork for the surface groove (10).

7. A method according to Claim 6, characterized in that there is a flange component (15) in the casting support (13), to which the aforesaid strips (16) are attached.

8. A method according to one of Claims 5 - 7, characterized in that there is a second flange component (14) in the casting support (13) to provide support, which is advantageously sealed to the upper surface of the hollow-core slab (5) preferably with silicone.

9. A method according to Claims 5 - 8, characterized in that the aforesaid holes (18) are drilled in the hollow-core slab (5) spacing 300 - 400 mm apart.

## Patentansprüche

1. Zellenkompostieranlagen-Bodenkonstruktion, bei welcher der Boden vorgefertigte Hohlkörperplatten (5) umfasst, deren jede mit ihren Hohlräumen mehrere Hauptluftkanäle (11) bildet, wobei der Boden (1) auch von den in seinem Inneren liegenden Hauptluftkanälen (11) zur Bodenoberfläche reichende Luftverteilungskanäle (12) zum Eintragen von Luft in das auf dem Boden liegende Kompostiergut umfasst, dadurch gekennzeichnet, dass der Boden aus den besagten Platten (5) sowie aus einer auf die Platten (5) getrennt aufzugießenden/aufzuschüttenden Estrich- oder Bodenschicht (9) besteht, welche Letztere die Formation der die Luftverteilungskanäle (12) bildenden Gießstützen (13) umgibt.

2. Zellenkompostieranlagen-Bodenkonstruktion nach Anspruch 1, dadurch gekennzeichnet, daß sich die einzelne Gießstütze (13) nach oben zu konisch verjüngt und in einer Rille der aufgebrachten Bodenschicht (9) endet.

3. Zellenkompostieranlagen-Bodenkonstruktion nach Anspruch 1 oder 2, dadurch gekennzeichnet, dass die Luftverteilungskanäle (12) in ihrer Größe so abgestimmt sind, dass bei einem Luftdruck von 2000 bis 3000 kPa im Hohlraum (11) die Luftgeschwindigkeit im Luftverteilungskanal (12) an dessen oberem Ende 5 bis 6 m/s beträgt.

4. Zellenkompostieranlagen-Bodenkonstruktion nach den Ansprüchen 1 bis 3, dadurch gekennzeichnet, dass an jeder der Hohlkörperplatten (5) wenigstens an dem einen Ende abnehmbare Verschlusselemente (20) vorhanden sind, die ein Reinigen der Hohlräume (11) ermöglichen.

5. Zur Herstellung der Zellenkompostieranlagen-Bodenkonstruktion dienendes Verfahren, bei dem für die Bodenkonstruktion Hohlkörperplatten (5), die mit ihren Hohlräumen Hauptluftkanäle bilden, eingesetzt werden und von den besagten Hauptluftkanälen (11) sich bis zur Bodenoberfläche erstreckende Luftverteilungskanäle (12) zum Eintragen von Luft in das auf den Boden aufgeschüttete Kompostiergut gebildet werden, dadurch gekennzeichnet, dass nach unten hin Durchbrüche (18) zu den Hohlräumen (11) der Hohlkörperplatten (5) hergestellt werden und eine Deckschicht (9) aufgegossen/aufgeschüttet wird, wobei auf die Durchbrüche (18) aufgesetzte Gießstützen (13) zur Bildung der Luftverteilungskanäle (12) dienen.

6. Verfahren nach Anspruch 5, dadurch gekennzeichnet, dass auf die besagten Gießstützen (13) in Richtung der Längsachse der Zellenkompostieranlage (6) verlaufende Leisten (17) als Gießkerne für die Oberflächenrillen (10) aufgesetzt werden.

7. Verfahren nach Anspruch 6, dadurch gekennzeichnet, dass die Gießstütze (13) ein Flanschteil (15) hat, an dem die besagten Leisten (16) befestigt werden.

8. Verfahren nach irgend einem der Ansprüche 5 bis 7, dadurch gekennzeichnet, dass die Gießstütze (13) zur Abstützung ein zweites Flanschteil (14) hat, das bevorzugt gegen die Oberfläche der Hohlkörperplatte (5) am besten mit Silicon abgedichtet wird.

9. Verfahren nach den Ansprüchen 5 bis 8, dadurch gekennzeichnet, dass die besagten Durchbrüche (18) in gegenseitigen Abständen von 300 bis 400 mm in die Hohlkörperplatte (5) gebohrt werden.

## Revendications

1. Structure de sol de tunnel de compostage comprenant des dalles à âme creuse préfabriquées (5) qui forment chacune avec leurs conduits plusieurs conduits d'aération principaux (11) ; dans le sol (1) se trouvent des conduits de distribution d'air (12) remontant des conduits d'aération principaux (11) vers la surface du sol et permettant d'amener l'air dans la masse qui repose par-dessus, structure caractérisée par le fait que le sol comprend lesdites dalles (5) et une chape (9) coulée séparément par-dessus ces dalles (5) et qui entoure les supports de coulage (13) formant lesdits conduits de distribution d'air (12).

2. Structure de sol de tunnel de compostage conforme à la revendication 1 caractérisée par le fait que chacun des supports de coulage (13) est en forme de cône se rétrécissant vers le haut et se termine au niveau de la cannelure formée dans la chape (9).

3. Structure de sol de tunnel de compostage conforme aux revendications 1 ou 2 caractérisée par le fait que la taille des conduits de distribution d'air (12) est conçue de sorte que la vitesse de l'air à la sortie du conduit de distribution d'air (12) est de 5 - 6 m/s quand la pression de l'air dans les conduits (11) est de 2000 - 3000 kPa.

4. Structure de sol de tunnel de compostage conforme aux revendications 1 à 3 caractérisée par le fait qu'au moins à l'une des extrémités de chaque dalle à âme creuse (5) se trouvent des dispositifs de fermeture et ouverture (20) en vue du nettoyage des conduits (11).

5. Procédé de fabrication d'une structure de sol de tunnel de compostage d'après lequel la structure de sol est fabriquée à partir de dalles à âme creuse (5) qui forment avec leurs conduits les conduits d'aération principaux (11), et où l'on aménage des conduits de distribution (12) qui partent desdits conduits (11) en direction du sol du tunnel et qui permettent d'amener l'air dans la masse qui repose par-dessus, caractérisé par le fait que l'on aménage des trous (18) allant vers le bas dans les conduits (11) des dalles à âme creuse (11), et que l'on coule une chape (9) en utilisant des supports de coulage (13) placés sur les trous (18) et destinés à former les conduits de distribution (12).

6. Procédé conforme à la revendication 5 caractérisé par le fait que sur lesdits supports de coulage (13) sont fixées des lattes (16) dans le sens longitudinal du tunnel de compostage (6), qui servent à former des moules de coulage d'une cannelure (10) dans la surface du sol.

7. Procédé conforme à la revendication 6 caractérisé par le fait que le support de coulage (13) est muni d'un collet (15) sur lequel lesdites lattes (16) sont fixées.

8. Procédé conforme à l'une des revendications 5 à 7 caractérisé par le fait que le support de coulage (13) est muni d'un autre collet (14) destiné à le soutenir, et qui selon un mode de réalisation avantageux de l'invention est scellé contre la surface de la dalle à âme creuse (5), de préférence avec de la résine de silicone.

9. Procédé conforme à l'une des revendications 5 à 8, caractérisé par le fait que les trous (18) sont forés dans la dalle à âme creuse (5) à 300 - 400 mm d'intervalle.
